# EUROPÄISCHE PATENTSCHRIFT

(11) **EP 2 994 315 B1**
(45) Veröffentlichungstag und Bekanntmachung des Hinweises auf die Patenterteilung: **12.02.2020**
(21) Anmeldenummer: 14724639.1
(22) Anmeldetag: 05.05.2014
(51) Int. Cl.: B42D 15/00, B42D 25/00, B42D 25/405, B42D 25/29, B41M 3/14, C09C 1/00, G07D 7/06, C09K 11/68, C09K 11/77, D21H 21/40, G01N 23/20091, G01N 23/223, G01N 21/65, G07D 7/00, D21H 21/30, G07D 7/1205

(54) **VERFAHREN ZUR MARKIERUNG EINES MERKMALSSTOFFES, SICHERHEITSMERKMAL, WERTDOKUMENT UND VERFAHREN ZUR PRÜFUNG DESSELBEN**
METHOD FOR MARKING A FEATURE SUBSTANCE, SECURITY FEATURE, DOCUMENT OF VALUE AND METHOD FOR VERIFYING SAID DOCUMENT
PROCÉDÉ DE MARQUAGE D'UNE MATIÈRE POUR SIGNE DE SÉCURITÉ, SIGNE DE SÉCURITÉ, DOCUMENT DE VALEUR ET PROCÉDÉ DE VÉRIFICATION DE CELUI-CI

(30) Priorität: 07.05.2013 DE 102013007811
(43) Veröffentlichungstag der Anmeldung: 16.03.2016
(73) Patentinhaber: Giesecke+Devrient Currency Technology GmbH, 81677 München (DE)
(72) Erfinder: STOCK, Kai, Uwe, 82031 Grünwald (DE); STARK, Martin, 81825 München (DE)
(86) Internationale Anmeldenummer: PCT/EP2014/001197
(87) Internationale Veröffentlichungsnummer: WO 2014/180557

(56) Entgegenhaltungen:
- EP-A1- 0 927 749
- FR-A1- 2 866 460
- US-B1- 6 643 001

## Beschreibung

Die Erfindung betrifft ein Verfahren zur Markierung eines insbesondere in pulverisierter Form vorliegenden Merkmalsstoffes mit mindestens einem Marker. Die Erfindung betrifft des Weiteren ein den markierten Merkmalsstoff aufweisendes Sicherheitsmerkmal für die Absicherung von Wertdokumenten, ein Wertdokument mit einem solchen Sicherheitsmerkmal und ein Verfahren zur Prüfung der Herkunft des Wertdokuments.

Die Absicherung von Wertdokumenten gegen Fälschung mittels Sicherheitsmerkmalen ist bereits seit langem bekannt. Es sind Merkmalsstoffe bekannt, die z.B. auf magnetischen, thermischen, elektrischen und/oder optischen (z.B. Absorption und Emission) Effekten beruhen, durch welche die spezifische Detektierbarkeit gewährleistet wird.

Von besonderer Bedeutung sind lumineszierende Merkmalsstoffe. In solchen Stoffen werden als lumineszierende Komponente Substanzen (die nachfolgend auch als Luminophore bezeichnet werden) herangezogen, die in der Lage sind, nach Anregung (z.B. durch Licht, Wärme oder durch ein elektrisches Feld) Licht mit einer charakteristischen Spektralverteilung zu emittieren. Bevorzugt werden sie aus mit Übergangsmetallen oder Seltenerdmetallen als lumineszierende Ionen dotierten Wirtsgittern gebildet (nachfolgend wird anstelle des Begriffs Wirtsgitter auch der Begriff Matrix verwendet). Für die Dotierung wurden auch schon Kombinationen von Übergangsmetallen und/oder Seltenerdmetallen diskutiert, siehe z.B. die WO 99/38701. Übergangsmetallionen oder Seltenerdmetallionen haben den Vorteil, dass sie, nach entsprechender Anregung, eine oder mehrere charakteristische Lumineszenzen zeigen, die einen sicheren Nachweis und die Abgrenzung gegenüber anderen Spektren erleichtern. Die Emission der verwendeten Luminophore wird auch als Lumineszenz bezeichnet, dies kann Fluoreszenz und/oder Phosphoreszenz beinhalten.

Die Sicherheitsmerkmale werden in verschiedenen Anwendungsformen in und/oder auf Wertdokumente ein- und/oder aufgebracht. Insbesondere kann bei lumineszierenden Merkmalsstoffen auch eine Kombination von Luminophoren verwendet werden, deren Emissionen sich hinsichtlich ihrer spektralen und/oder zeitlichen Eigenschaften unterscheiden. Die Emissionsbanden der verwendeten Luminophore stellen eine Spektralkodierung dar.

Das Dokument EP 0927749 A1 beschreibt Flake-förmige Partikel aus mindestens zwei anorganischen Schichten als Bestandteil von Druckfarben und Beschichtungen. Des Weiteren beschreibt die Schrift ein Sicherheitsdokument, das die obigen Flake-förmigen Partikel zur Absicherung bzw. Identifikation ("tagging") aufweist.

Das Dokument FR 2866460 A1 beschreibt ein Verfahren für das Absichern einer Banknote mit einem Marker, wobei der Marker dazu in der Lage ist, eine Lichttransmissionswellenlänge in Antwort auf eine weitere Anregungsstrahlung zu erzeugen.

Der Erfindung liegt die Aufgabe zugrunde, die Komponente(n) des Merkmalsstoffes so weiterzubilden, dass eine Chargennachverfolgung, eine Identifikation der Produktionsstätte bzw. des Herstellers ermöglicht wird. Insbesondere die Zuordnung zu einem Hersteller soll ermöglicht werden, um auf diese Weise eine verbesserte Rückverfolgbarkeit der zum Wertdokument beitragenden Absicherungselemente zu gewährleisten. Des Weiteren soll insbesondere die Erkennung nachgestellter Komponenten ermöglicht werden.

Diese Aufgabe wird durch die in den Hauptansprüchen definierten Merkmalskombinationen gelöst. Bevorzugte Ausführungsformen sind Gegenstand der Unteransprüche.

### Zusammenfassung der Erfindung

(Erster Aspekt) Verfahren zur Markierung eines insbesondere in pulverisierter Form vorliegenden Merkmalsstoffes mit mindestens einem lumineszierenden Marker, wie im Anspruch 1 definiert.

Mit der Formulierung "die makroskopische Detektier- und Identifizierbarkeit des Merkmalsstoffes wird durch den Marker nicht beeinflusst" ist insbesondere gemeint, dass sich die Messsignal-Größe bzw. Messsignal-Intensität, die dem jeweiligen Verfahren zur Echtheitsprüfung des Wertdokuments bzw. für die makroskopische Detektion bzw. Identifikation des Merkmalsstoffs zugrunde liegt (z.B. die gemessene Lumineszenzintensität eines lumineszierenden Merkmalsstoffes) durch die Anwesenheit des Markers weniger als 5%, bevorzugt weniger als 2% und insbesondere bevorzugt weniger als 1% ändert.

(Zweiter Aspekt) Sicherheitsmerkmal für die Absicherung von Wertdokumenten, wie im Anspruch 9 definiert.

(Dritter Aspekt) Wertdokument, wie im Anspruch 17 definiert.

Das Wertdokument kann ein Substrat aus Papier und/oder Kunststoff aufweisen.

Das Substrat kann z.B. ein Papiersubstrat, ein Kunststoff-Substrat oder ein Papier/Kunststoff-Mehrschichtsubstrat, wie etwa ein Kunststoff/Papier/Kunststoff-Substrat oder ein Papier/ Kunststoff/ PapierSubstrat, sein. Unter einem Kunststoff/Papier/Kunststoff-Substrat ist ein Substrat mit einer Papier-Mittellage zu verstehen, die beidseitig mit einer Kunststoff-Lage bzw. Folie versehen ist (siehe die WO 2004/028825 A2). Ein Papier/Kunststoff/Papier-Substrat ist aus der WO 2006/066431 A1 bekannt.

(Vierter Aspekt) Verfahren zur Prüfung der Herkunft des Wertdokuments, wie im Anspruch 18 definiert.

### Ausführliche Beschreibung der Erfindung

Wertdokumente im Rahmen der Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise CDs, Verpackungen und ähnliches. Das bevorzugte Anwendungsgebiet sind Banknoten, die insbesondere auf einem Papiersubstrat beruhen.

Der zu markierende, insbesondere in pulverisierter Form vorliegende und für die Authentifizierung von Wertdokumenten geeignete Merkmalsstoff ist ein lumineszierender Merkmalsstoff.

Sicherheitsmerkmale für Wertdokumente mit einer lumineszierenden Komponente auf Basis von Luminophoren mit spezifischen Eigenschaften in ihrer Emission und Anregung sind bekannt, z.B. aus der WO 81/03507 A1, der EP 0 966 504 B1, der WO 2011/084663 A2, der DE 198 04 021 A1 und der DE 101 11116 A1. Ein solches Sicherheitsmerkmal kann der Papiermasse während der Herstellung des Papier-basierenden Wertdokumentsubstrats in Form eines Pulvers hinzugefügt werden. Darüber hinaus kann das Sicherheitsmerkmal in Form eines Pulvers einer Druckfarbe hinzugefügt werden, wobei die Druckfarbe in einem nachfolgenden Schritt auf das Wertdokumentsubstrat aufgebracht wird. Es ist auch möglich, die Druckfarbe auf ein auf das Wertdokumentsubstrat appliziertes Folienelement aufzubringen. Bei dem Folienelement kann es sich z.B. um ein streifenförmiges oder ein Patchförmiges Folienelement handeln.

Anstelle des Begriffs "Merkmalsstoff" wird an einigen Stellen in der Beschreibung einfach nur der Begriff "Merkmal" gewählt. Der "lumineszierende Merkmalsstoff" wird in der Beschreibung auch als "lumineszierende Komponente" oder als "lumineszierendes Merkmal" bezeichnet.

Der zu markierende lumineszierende Merkmalsstoff kann insbesondere auf einem eine Matrix bildenden anorganischen Festkörper basieren, der mit einem oder mehreren Seltenerdmetallen oder Übergangsmetallen dotiert ist.

Geeignete anorganische Festkörper, die zur Bildung einer Matrix geeignet sind, sind beispielsweise:
Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Granate, darunter u. A. z.B. Yttrium-Eisen-Granate, Yttrium-Aluminium-Granate, Gadolinium-Gallium-Granate;
Perowskite, darunter u.A. Yttrium-Aluminium-Perowskit, Lanthan-Gallium-Perowskit; Spinelle, darunter u. A. Zink-Aluminium-Spinelle, Magnesium-Aluminium-Spinelle, Mangan-Eisen-Spinelle; oder Mischoxide wie z.B. ITO (Indiumzinnoxid);
Oxyhalogenide und Oxychalkogenide, insbesondere Oxychloride wie z. B. Yttriumoxychlorid, Lanthanoxychlorid; sowie Oxysulfide, wie z.B. Yttriumoxysulfid, Gadoliniumoxysulfid;
Sulfide und andere Chalkogenide, z.B. Zinksulfid, Cadmiumsulfid, Zinkselenid, Cadmiumselenid;
Sulfate, insbesondere Bariumsulfat und Strontiumsulfat;
Phosphate, insbesondere Bariumphosphat, Strontiumphosphat, Calciumphosphat, Yttriumphosphat, Lanthanphosphat, sowie komplexere phosphatbasierte Verbindungen wie z.B. Apatite, darunter u. A. Calciumhydroxylapatite, Calciumfluoroapatite, Calciumchloroapatite; oder Spodiosite, darunter z.B. Calcium-Fluoro-Spodiosite, Calcium-Chloro-Spodiosite;
Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;
weitere anorganische Verbindungsklassen wie z.B. Vanadate, Germanate, Arsenate, Niobate, Tantalate.

Es wird bevorzugt, dass der zu markierende lumineszierende Merkmalsstoff in Form von lumineszierenden Partikeln vorliegt, die im nicht sichtbaren Spektrum, d.h. im UV-, NIR- oder IR-Bereich, emittieren (die Abkürzung "UV" bezeichnet den Begriff "Ultraviolett", die Abkürzung "NIR" bezeichnet den Begriff "nahes Infrarot", die Abkürzung "IR" bezeichnet den Begriff "Infrarot"). Mit Bezug auf die Einbringung der lumineszierenden Partikel in Wertdokumente, z.B. Banknoten, wird bevorzugt, dass die Partikel höchstens eine Korngröße von 30 µm, besonders bevorzugt höchstens eine Korngröße von 20 µm aufweisen.

Der vorliegenden Erfindung liegt die Idee zugrunde, den zu markierenden, lumineszierenden Merkmalsstoff durch eine eigene forensische Markierung abzusichern, durch die z.B. unterschiedliche Produktionschargen, Lieferungen, Hersteller, oder Verarbeiter markiert werden können. Die Markierung kann aus einem oder mehreren, lumineszierenden, Markern bzw. Markerstoffen mit unterscheidbarer spektraler Signatur zusammengesetzt sein. Die Markerstoffe werden dem zu markierenden, lumineszierenden Merkmalsstoff in so geringer Menge hinzugefügt, dass deren Detektion mittels üblicher Sensorik (mit anderen Worten, deren makroskopische Detektion, insbesondere deren maschinelle Detektion in der Banknotenbearbeitung), nicht möglich ist und die Eigenschaften des zu markierenden, lumineszierenden Merkmalsstoffes nicht anwendungsrelevant beeinflusst werden.

Der Anteil der Markers (d.h. der Marker-Partikel) liegt bevorzugt in einem Bereich von 0,1 bis 10 Gew.-%, insbesondere bevorzugt in einem Bereich von 1 bis 5 Gew.-% bezogen auf das Gesamtgewicht des markierten Merkmalsstoffes.

Es wird bevorzugt, dass die nominale Flächendichte (d.h. die Anzahl der Marker-Partikel pro Flächeneinheit des Wertdokuments) der Marker-Partikel, deren Größe ≥ 1µm ist, im Wertdokument (z.B. eine Banknote) in einem Bereich von 10 bis 10⁹ Partikel pro Quadratzentimeter, insbesondere bevorzugt in einem Bereich von 100 bis 10⁵ Partikel pro Quadratzentimeter ist. Je nach verwendeter Methode und experimentellem Setup kann dann die tatsächlich im Wertdokument detektierbare Anzahl an Markerpartikeln leicht (z.B. um einen Faktor 2) oder auch stark (z.B. um einen Faktor 100) von der nominell enthaltenen Anzahl nach unten abweichen.

Die Detektion des Markers im Stadium der Verwendung des markierten Merkmalsstoffes zur Absicherung von Wertdokumenten ist nur mittels eines ortsauflösenden Analyseverfahrens, das dazu geeignet ist, bis auf Einzelpartikelbasis aufzulösen, möglich. Auf diese Weise kann die Unterscheidbarkeit von sonstigen, in Grundmaterialien von Wertdokumenten in hoher Anzahl vorkommenden Stoffen (z.B. Aufheller, Additive, Füllstoffe, Stoffe aus der Leimung) gewährleistet werden. Andererseits kann die forensische Markierung auf diese Weise von Verunreinigungen unterschieden werden.

Als Marker wird ein lumineszierender Markerstoff, insbesondere ein Luminophor, verwendet, sodass die Detektion des Markers anhand der Lumineszenz erfolgen kann. Analysetechniken, die eine ortsaufgelöste Einzelpartikeluntersuchung erlauben, sind in diesem Falle insbesondere die konfokale Lasermikroskopie oder die Multiphotonenmikroskopie.

Darüber hinaus kann auch ein lumineszierender Markerstoff mit einer spezifischen kristallinen Phase bzw. Struktur oder einer spezifischen chemischen Zusammensetzung eingesetzt werden, sodass eine Identifikation sowohl anhand der Lumineszenz des Markerstoffs, als auch anhand der Struktur und/oder der chemischen Zusammensetzung des Markerstoffs möglich ist.

Nachfolgend wird der Fall der Markierung eines lumineszierenden Merkmalsstoffes mittels eines lumineszierenden Markers etwas näher beschrieben. Die Detektion des lumineszierenden Markers erfolgt bevorzugt mittels konfokaler Laserspektroskopie.

Da typischerweise von sehr geringen Konzentrationen des lumineszierenden Markers in einem ebenfalls (mindestens teilweise) lumineszierenden Wertdokumentsubstrat ausgegangen wird, ist das Auffinden der Markerpartikel und ihre eindeutige Zuordnung der Kern des Nachweises. Der Nachweis kann auf Grundlage des lokalen Auftretens (nachfolgend als "Lokalisierung" bezeichnet) des Signals und/oder auf Grundlage der Nutzung einer oder mehrerer Eigenschaften des lumineszierenden Markers, nämlich der Emissionsbanden, der Anregungsbanden und der Lumineszenzlebensdauer, erfolgen:
Lokalisierung: Da der Marker in Form von Partikeln (mit einer bevorzugten Korngröße (D99) in einem Bereich von 1 bis 30 µm) vorliegt, tritt die Lumineszenz lokal konzentriert auf. Erreicht man es, die Partikel durch ortsaufgelöste mikroskopische Detektion aufzulösen, erhält man ein klares Signal zur Identifikation. In der Anwendung, z.B. einem Wertdokument mit einem Papiersubstrat, in dem der markierte lumineszierende Merkmalsstoff enthalten ist, sind die Markerpartikel selten, d.h. gut versteckt, und beeinflussen den markierten lumineszierenden Merkmalsstoff bei makroskopischer, auf Lumineszenzmessung basierender Detektion nicht. In diesem Zusammenhang ist die Detektion des Markers mittels konfokaler Lasermikroskopie oder Multiphotonenmikroskopie, die beide eine sehr hohe räumliche Auflösung besitzen und zugleich spektral auflösen, besonders geeignet.

Emissionsbanden: Die Form der Emissionsbanden erlaubt die Erkennung und Identifikation des Markers. Bevorzugt heben sich diese Banden gegenüber der Hintergrundlumineszenz des Wertdokumentsubstrats und ein- bzw. aufgebrachter Aufheller ab. Sind die Emissionsbanden verglichen mit den anderen im Wertdokumentsubstrat auftretenden Lumineszenzen schmal und deutlich strukturiert, dann wird die Erkennung deutlich erleichtert. Diese Eigenschaften lassen sich ausnutzen, um einen automatisierten Prozess zum Auffinden der Partikel anhand eines spektralen Fingerabdrucks zu gewährleisten. Beispielsweise kann im Falle der konfokalen Lasermikroskopie das Spektrum jedes angefahrenen Bildpunktes mit dem hinterlegten Spektrum des Markers verglichen werden. Wurde der Marker geschickt ausgewählt, liefert das Verfahren zuverlässig den Partikelort und blendet Untergrund und Fremdlumineszenz aus.

Anregungsbanden: Auch die Anregungsbanden können strukturiert vorliegen. Dabei ist es von Interesse, den Marker so auszuwählen, dass die Anregungsbanden möglichst gut mit mindestens einer der zur Verfügung stehenden anregenden Laser-Linien überlappen. Weist der Marker mehrere Anregungsbanden auf, wählt man bevorzugt eine Bande zur Anregung, bei der Hintergrund und/oder Aufheller im Wertdokument nicht oder nur wenig angeregt werden. Dies erleichtert das Auffinden der Markerpartikel bei einem lumineszierenden Untergrund.

Lumineszenzlebensdauer: Als weiterer Parameter kann die Lumineszenzlebensdauer herangezogen werden. Wählt man z.B. phosphoreszierende Marker (insbesondere mit einer Lebensdauer > 10 µs) kann der Untergrund auch durch eine Verzögerung der Detektion gegenüber der Anregung verringert werden.

Die spektralen Eigenschaften (d.h. die Emissionsbanden und/oder die Anregungsbanden) des lumineszierenden Markers und des damit markierten lumineszierenden Merkmalsstoffes überlappen sich nicht oder überlappen sich möglichst wenig. Dies kann z.B. dadurch erreicht werden, dass der Marker in einem spektralen Bereich emittiert, in dem der markierte lumineszierende Merkmalsstoff unsichtbar ist. Sind auch die Anregungsbanden ohne nutzbarem Überlapp, so können Marker und der markierte lumineszierende Merkmalsstoff getrennt nachgewiesen werden.

Die Erfindung wird nachstehend in Verbindung mit den Figuren 1 bis 5 anhand von Ausführungsbeispielen beschrieben.

In den Figuren zeigen
- Fig. 1: die Zufallsverteilung von drei Markerpartikeln, die alle einer einzigen Marker-Art angehören, innerhalb eines Ausschnitts eines Wertdokumentsubstrats gemäß einem ersten Ausführungsbeispiel,
- Fig. 2: die jedem der drei in Fig. 1 gezeigten Markerpartikel zugehörigen, mittels konfokaler Lasermikroskopie gemessenen Emissionsspektren,
- Fig. 3: die Zufallsverteilung von drei Markerpartikeln, die jeweils einer anderen Marker-Art angehören, innerhalb eines Ausschnitts eines Wertdokumentsubstrats gemäß einem zweiten Ausführungsbeispiel,
- Fig. 4: die jedem der drei in Fig. 3 gezeigten Markerpartikel zugehörigen, mittels konfokaler Lasermikroskopie gemessenen Emissionsspektren,
- Fig. 5: die mittels ortsaufgelöster Röntgenbeugung (µXRD) an einem Wertdokument gemäß einem nicht erfindungsgemäßen dritten Ausführungsbeispiel gemessenen XRD-Spektren von FüllstoffPartikeln (TiO₂), Merkmalspartikeln (ZrO₂) und Markerpartikeln (MoS₂).

### <Ausführungsbeispiel 1>

Ein lumineszierender Merkmalsstoff, basierend auf Seltenerd-dotierten Lumineszenzpigmenten, wurde mit einem spezifischen Marker abgemischt, sodass der Anteil des Markers weniger als 5 Gew.-% bezogen auf das Gesamtgewicht des markierten lumineszierenden Merkmalsstoffes betrug. Der für den Echtheitsnachweis verantwortliche Merkmalsstoff emittiert im nicht sichtbaren Spektralbereich - deutlich getrennt vom Marker. Als Marker wurden mit Europium dotierte Lumineszenzpigmente auf Y₂O₂S-Basis verwendet (die Zusammensetzung Y₂O₂S:Eu wird nachstehend mit "YSA" abgekürzt). Merkmalsstoff und Marker weisen disjunkte, d.h. nichtüberlappende, Spektraleigenschaften auf. Die Korngröße (D99) des Markers betrug 20 µm. Ausgehend von einer Papiermasse, in der der markierte Merkmalsstoff eingebracht worden war, wurde in einem Blattbildner ein Blatt Papier hergestellt. In einem unabhängigen Arbeitsschritt wurde das Dokument anhand der nicht sichtbaren Lumineszenz des Merkmalsstoffes als echt bewertet. Eine Probe des Papiers mit einer Abmessung von 3cm x 3cm wurde anschließend in einem bestimmten Bereich mittels konfokaler Lasermikroskopie untersucht (Plan-Apochromat 20x/0,8 M27; Field of View 0,75mm x 0,75 mm; Anregungswellenlänge: 458 nm; 17% Maximalleistung).

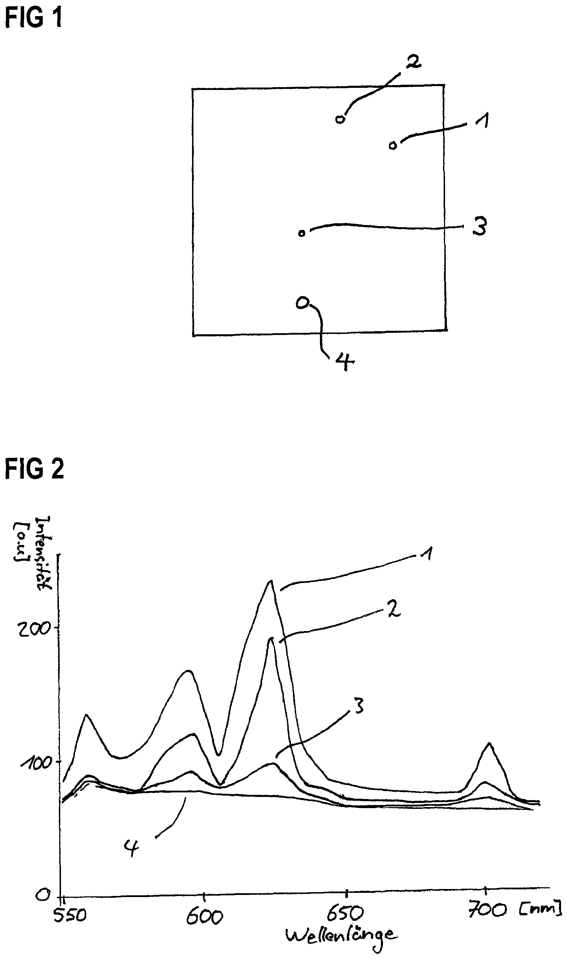

Die Fig. 1 zeigt den spektroskopisch untersuchten Papier-Bereich mit einer Abmessung von 0,75mm x 0,75mm. Die Bezugsnummern 1, 2 und 3 bezeichnen drei Markerpartikel des YSA-Markers. An der Stelle mit der Bezugsnummer 4 wurde die Hintergrund-Lumineszenz aufgenommen.

Die jeweils den Markerpartikeln 1, 2 und 3 und dem Hintergrund 4 zugehörigen Emissionsspektren sind in der Fig. 2 gezeigt. Die einzelnen YSA-Markerpartikel lassen sich gegenüber der Papierstruktur (d.h. dem Hintergrund 4) spektral eindeutig identifizieren. Zudem ist die Intensität der Einzelpartikel stark genug, um Spektren aufzulösen.

### <Ausführungsbeispiel 2>

Dieses Ausführungsbeispiel verdeutlicht die Möglichkeit, einen spezifischen Marker aus einer Mischung verschiedener Marker zu identifizieren. Hierfür wurden drei verschiedene Marker-Arten mit einer Konzentration von jeweils 0,25 Gew.-% und zusätzlich Füllstoffpartikel (BaSO₄) in einem Papier eingebracht. Die Untersuchungsbedingungen waren mit den vorstehend im Ausführungsbeispiel 1 beschriebenen Bedingungen identisch.

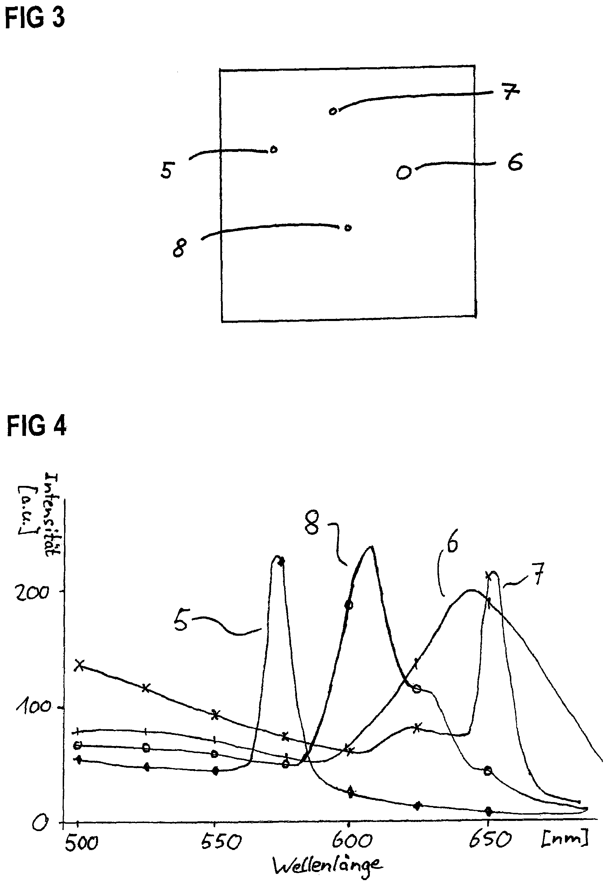

Die Fig. 3 zeigt den spektroskopisch untersuchten Papier-Bereich mit einer Abmessung von 0,75mm x 0,75mm. Die Bezugsnummern 5, 7 und 8 bezeichnen drei Markerpartikeln, die jeweils einer anderen Marker-Art angehören. Die Bezugsnummer 6 bezeichnet ein BaSO₄-Füllstoffpartikel des Papiers.

Die jeweils den Markerpartikeln 5, 7 und 8 und dem Füllstoffpartikel 6 zugehörigen Emissionsspektren sind in der Fig. 4 gezeigt. Aus der Figur geht hervor, dass sich die Partikel mittels konfokaler Lasermikroskopie unterscheiden und anhand der Form der Spektren eindeutig zuordnen lassen.

### <Ausführungsbeispiel 3 (nicht erfindungsgemäß)>

Dieses Ausführungsbeispiel veranschaulicht eine nicht erfindungsgemäße Ausführung mithilfe nicht-lumineszierender Markerpartikel.

µXRD-Untersuchungsaufbauten mit einer Auflösung in einem Bereich mehrerer Mikrometer oder mehrerer 100-Nanometer, was für eine Einzelpartikeldetektion ausreichend ist, sind im Stand der Technik bekannt.

Die Kennzeichnung eines lumineszierenden Merkmalsstoffes mithilfe des XRD-Musters kann durch Beimischung eines Markerstoffes, der sich im gesamten XRD-Muster, oder auch nur in einer prominenten Linie, deutlich vom Merkmalsstoff unterscheidet, bewerkstelligt werden. Da sich innerhalb des Wertdokumentsubstrats fein verteilte Additive oder Füllstoffe befinden können, ist es vorteilhaft, wenn sich der Markerstoff zumindest in einer prominenten Linie des XRD-Musters deutlich von den Additiven oder Füllstoffen unterscheidet.

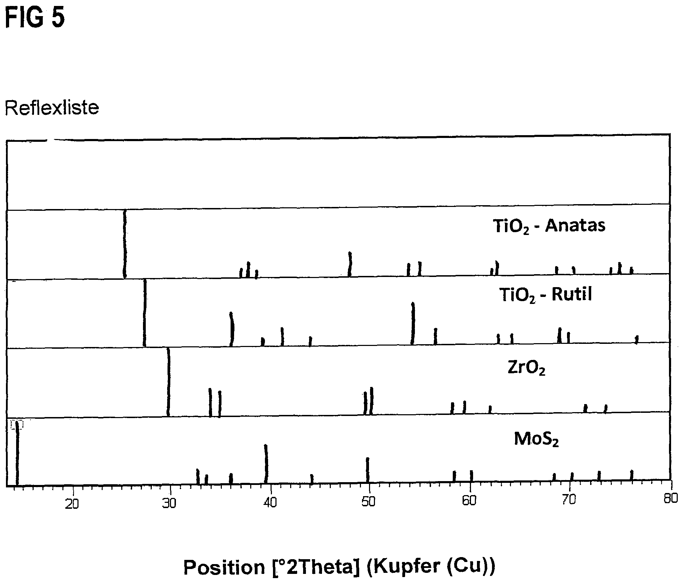

Im Ausführungsbeispiel wurde ein auf ZrO₂ basierender lumineszierender Merkmalsstoff mithilfe von MoS₂-Partikeln als Markerstoff markiert und in ein Papier eingebettet. In der Papiermasse befand sich feinverteiltes TiO₂ in kristalliner Form (Anatas- oder Rutil-Form). In der Fig. 5 sind die XRD-Muster der verschiedenen Stoffe aufgeführt.

Die beiden im Papier vorhandenen TiO₂-Modifikationen stellen einen Untergrund dar, der sich auch bei hoher Ortsauflösung nicht komplett ausblenden lässt. Sowohl der Merkmalsstoff ZrO₂, als auch der Markerstoff MoS₂ besitzen eine vom Untergrund deutlich unterscheidbare XRD-Signatur.

Durch Aufnahme mit hoher Ortsauflösung lässt sich die XRD-Signatur des Markerstoffes ohne Störung durch den Merkmalsstoff ZrO₂, allenfalls mit einem schwachen Untergrund durch das TiO₂, aufnehmen. Im vorliegenden Fall ließe sich der Nachweis des Markers und damit der Echtheit des Merkmalsstoffes auch allein durch den Nachweis der Hauptlinie bei ca. 14° erbringen.

### <Ausführungsbeispiel 4 (nicht erfindungsgemäß)>

Dieses Ausführungsbeispiel veranschaulicht eine nicht erfindungsgemäße Ausführung mithilfe nicht-lumineszierender Markerpartikel durch Verwendung der energiedispersiven Röntgenspektroskopie (EDX) oder der ortsaufgelösten Röntgenfluoreszenzanalyse (µXRF).

Der Marker enthält gezielt chemische Elemente, die in der Endanwendung (d.h. im Wertdokument) üblicherweise nicht und insbesondere nicht gemeinsam auftreten. Dieser Markerstoff wird dem lumineszierenden Merkmalsstoff beigemischt. Über Röntgenfluoreszenz wird die chemische Zusammensetzung am Einzelpartikel in der Endanwendung bestimmt. Als positives Ergebnis gilt die Kolokalisierung der Markerelemente, d.h. die gemeinsame Auffindung der Elemente des Markers am selben Ort.

Bei der Röntgenfluoreszenz werden Atome durch eine anregende Strahlung (Röntgenstrahlung oder Elektronenstrahlen) ionisiert. Die Fehlstelle wird von einem Elektron besetzt, das von einem höheren Niveau stammt. Bei diesem Vorgang entsteht eine für das chemische Element charakteristische Röntgenstrahlung, die energieaufgelöst detektiert wird.

Als elementspezifische Analysetechnik kann die Röntgenfluoreszenz bis hinunter zur Einzelpartikeldetektion eingesetzt werden. Technisch umgesetzt werden vor allem zwei Verfahren. Im ersten Verfahren wird Röntgenfluoreszenz durch Röntgenbestrahlung (XRF, Auflösung im µm-Bereich) ausgelöst, im zweiten Verfahren durch Elektronenbestrahlung im Rasterelektronenmikroskop (EDX, Auflösung im Sub-µm-Bereich). In beiden Technologien wird eine ortsaufgelöste Elementanalyse auf Grundlage des Röntgenfluoreszenzspektrums der Elemente im Messbereich erzielt. Im Folgenden wird exemplarisch eine Marker-Anwendung mittels ortsauflösendem XRF beschrieben:
Die Marker-Substanz ist eine chemische Verbindung (z.B. Element-Oxide) aus geeigneten Elementen, die auch in Form einer Mischung verschiedener Stöchiometrien vorliegen kann. Um eine Marker-Funktion zu erzielen, werden Elementkombinationen verwendet, die sowohl im Wertdokument (insbesondere im Substrat), als auch im Merkmalsstoff höchstens spurenweise in Form einer chemischen Verunreinigung, oder gar nicht auftreten. Die Elemente, die typischerweise in einem Wertdokument vorkommen, können in der Marker-Substanz enthalten sein, tragen aber nicht die Information, die zur Bewertung des Markers herangezogen werden.

Typische Elemente, die in einem Wertdokument vorkommen und von denen sich ein Markersystem abgrenzen muss, sind:
C, H, O (vorhanden in organischen Papierfasern), Ca (vorhanden in CaCO₃, Weißpigmenten), Ba, Ti, S (vorhanden in den Füllstoffen TiO₂ und BaSO₄), Al, Si (vorhanden in Kaolinen, Füllstoffen).

Geeignete Elemente werden von der folgenden Gruppe gewählt:
P, Cu, Mn, Fe, Zn, Ga, Ge, Br, Sr, Y, Zr, Nb, Mo, Ru, Rh, Pd, Ag, In, Sn, Ta, W, Au, Bi.

Besonders bevorzugt sind Elemente der folgenden Gruppe:
Mn, Fe, Cu, Zn, Ga, Ge, Br, Sr, Y, Zr, Nb, Mo, Ag, In, Sn.

Um eine zuverlässige Detektion zu ermöglichen, werden vorzugsweise mindestens zwei Elemente zu einer Substanz kombiniert, die sich stabil einbringen lässt und deren Röntgenfluoreszenzbanden im betrachteten Spektralbereich deutlich separiert und/oder eng benachbart liegen. Überlappende Banden sind möglich, aber nicht bevorzugt.

Die nachfolgende Tabelle 1 fasst die spektrale Lage der Röntgenfluoreszenzbanden Kα, Kβ, Lα, Lβ, Lγ (ausgedrückt in ihrer charakteristischen Energie in keV) der genannten Elemente zusammen. Besonders geeignete Elemente werden durch das Zeichen "*" hinter dem Element-Symbol in Spalte 2 hervorgehoben.

**Tabelle 1**

| Atomic number | Symbol | Element | Kα (keV) | Kβ (keV) | Lα (keV) | Lβ (keV) | Lγ (keV) |
|---|---|---|---|---|---|---|---|
| 1 | H | Hydrogen | -- | -- | -- | -- | -- |
| 6 | C | Carbon | 0.282 | - | - | - | - |
| 7 | N | Nitrogen | 0.392 | - | - | - | - |
| 8 | O | Oxygen | 0.526 | - | - | - | - |
| 13 | Al | Aluminum | 1.49 | 1.55 | - | - | - |
| 14 | Si | Silicon | 1.74 | 1.83 | - | - | - |
| 15 | P | Phosphorus | 2.02 | 2.14 | - | - | - |
| 16 | S | Sulfur | 2.31 | 2.46 | - | - | - |
| 20 | Ca | Calcium | 3.69 | 4.01 | 0.34 | - | - |
| 22 | Ti | Titanium | 4.51 | 4.93 | 0.45 | 0.46 | |
| 25 | Mn * | Manganese | 5.90 | 6.49 | 0.64 | 0.65 | |
| 26 | Fe * | Iron | 6.40 | 7.06 | 0.70 | 0.72 | |
| 29 | Cu * | Copper | 8.04 | 8.90 | 0.93 | 0.95 | |
| 30 | Zn * | Zinc | 8.63 | 9.57 | 1.01 | 1.03 | |
| 31 | Ga * | Gallium | 9.24 | 10.26 | 1.10 | 1.12 | |
| 32 | Ge * | Germanium | 9.88 | 10.98 | 1.19 | 1.21 | |
| 35 | Br * | Bromine | 11.91 | 13.30 | 1.48 | 1.53 | |
| 38 | Sr * | Strontium | 14.15 | 15.85 | 1.81 | 1.87 | |
| 39 | Y * | Yttrium | 14.95 | 16.74 | 1.92 | 2.00 | |
| 40 | Zr * | Zirconium | 15.77 | 17.68 | 2.04 | 2.12 | 2.30 |
| 41 | Nb * | Niobium | 16.61 | 18.64 | 2.17 | 2.26 | 2.46 |
| 42 | Mo * | Molybdenum | 17.48 | 19.63 | 2.29 | 2.40 | 2.62 |
| 47 | Ag * | Silver | 22.16 | 24.96 | 2.98 | 3.16 | 3.52 |
| 49 | In * | Indium | 24.21 | 27.30 | 3.29 | 3.49 | 3.92 |
| 50 | Sn * | Tin | 25.27 | 28.5 | 3.44 | 3.66 | 4.13 |
| 56 | Ba | Barium | 32.19 | 36.4 | 4.47 | 4.83 | 5.53 |
| 72 | Hf | Hafnium | 55.76 | 63.21 | 7.89 | 9.02 | 10.5 |
| 73 | Ta | Tantalum | 57.52 | 65.21 | 8.14 | 9.34 | 10.9 |
| 74 | W | Tungsten | 59.31 | 67.23 | 8.39 | 9.67 | 11.3 |
| 79 | Au | Gold | 68.79 | 77.97 | 9.70 | 11.4413.4 | |
| 83 | Bi | Bismuth | 77.10 | 87.34 | 10.8413 | | |

### Beispiel 1: TiO₂-beladenes Papier, SrSnO₃ als Marker, Messung mittels XRF

Bei der Papierherstellung wird der Merkmalsstoff, der 2 Gew.-% Marker-Substanz enthält, eingebracht. Die nominelle Konzentration des Merkmalsstoffes im Papier bei der Herstellung des Papier beträgt 0,5 Gew.-%.

Als Marker-Substanz wurde SrSnO₃ gewählt, als Füllstoff dient TiO₂. Die Analysetechnik XRF liefert bei 45 keV Anregungsenergie im Emissionsenergiebereich von 10 keV bis 40 keV deutlich die Signale der Elemente Sr und Sn (siehe Tabelle 2).

**Tabelle 2**

| Element | Linie | Energie (keV) | Signal (counts) | Bemerkung |
|---|---|---|---|---|
| Strontium (Sr) | Kα | 14.15 | 3518 | |
| | Kβ | 15.85 | 530 | |
| Zinn (Sn) | Kα | 25.27 | 1320 | |
| | Kβ | 28.5 | 231 | |
| | | | | |
| Titan (Ti) | Kα | 4.51 | -- | außerhalb des Messbereichs |
| | Kβ | 4.93 | -- | |
| Untergrund (beispielsweise Papierfasern, unbekannte Füllstoffe) | | breit; Maximum bei 20.61 | 124 | Maximalwert des Untergrunds |

Im Beispiel 1 separieren die Linien des Markers deutlich: während das Element Sr hauptsächlich Röntgenfluoreszenz zwischen 14 und 16 keV emittiert, zeigt das Element Sn in einem deutlich höheren Energiebereich (25 bis 29 keV) seine maximale Emission.

### Beispiel 2: BaSO₄-TiO₂-beladenes Papier mit Bedruckung, wobei die Bedruckung CaCO₃, einen Merkmalsstoff unbekannter Zusammensetzung, und einen Marker enthält; ein zweiter beliebiger Merkmalsstoff ist im Papiersubstrat vorhanden, wobei CuGa₂O₄ als Marker einer ersten Charge und SrGa₂O₄ als Marker einer zweiten Charge verwendet wird; die Messung erfolgte durch Verwendung von ortsaufgelöstem XRF

Bei der Papierherstellung wird das Sicherheitsmerkmal aus zwei Chargen abgemischt, wobei jeweils 5 Gew.-% Markersubstanz CuGa2O4 beziehungsweise SrGa2O4 enthalten sind. Die nominelle Konzentration des abgemischten Merkmals im Papier bei der Herstellung des Papier beträgt 0,1 Gew.-%. Zusätzlich ist bekannt, dass auch in der Druckfarbe ein Merkmal mit Marker eingebracht wurde. Für die Analyse stellt sich die Frage, ob im vorliegenden Prüfling bereits die abgemischte Charge verwendet wurde.

Die Echtheit des Wertdokuments wird eindeutig über die Sicherheitselemente nachgewiesen. Die Eigenschaften der Bedruckung können in dieser Fragestellung ignoriert werden. Ein unbedruckter Bereich des Wertdokuments wird an zehn Stellen auf Partikel untersucht. Sieben relevante Partikel werden gefunden und deren Elementzusammensetzung bestimmt. Zusätzlich werden Füllstoffpartikel BaSO₄ und TiO₂ gefunden. Bei drei Partikeln wird die Kolokalisierung von Cu und Ga, bei drei weiteren die Kolokalisierung von Sr und Ga nachgewiesen. Ein weiteres Partikel enthält Sr und Mo als Elemente.

Aus dem Ergebnis lässt sich schließen, dass bereits eine Abmischung der bekannten Chargen (markiert mit SrGa2O4 und CuGa2O4) eingesetzt wurde. Da das Element Mo untypisch in der Banknotenanwendung ist, könnte dieses Element einem weiteren Marker zugeordnet sein, beispielsweise SrMoO4.

Im Energiebereich zwischen 4 keV und 20 keV auftretende Linien der genannten Elemente sind in der nachfolgenden Tabelle 3 durch das Symbol "*" hinter dem Zahlenwert hervorgehoben.

**Tabelle 3**

| Element | Kα [keV] | Kβ [keV] | Lα [keV] | Lβ [keV] | Lγ [keV] |
|---|---|---|---|---|---|
| Strontium Sr | 14.15* | 15.85* | 1.81 | 1.87 | |
| Kupfer Cu | 8.04* | 8.90* | 0.93 | 0.95 | |
| Gallium Ga | 9.24* | 10.26* | 1.10 | 1.12 | |
| Molybdän Mo | 17.48* | 19.63* | 2.29 | 2.40 | 2.62 |
| | | | | | |
| Calcium Ca | 3.69* | 4.01* | 0.34 | - | - |
| Titan Ti | 4.51* | 4.93* | 0.45 | 0.46 | |
| Barium Ba | 32.19 | 36.4 | 4.47* | 4.83* | 5.53* |

### Beispiel 3: TiO2-beladenes Papier mit einer Mischung aus Bi₂W₂O₉, Bi₂W₃O₁₂ und BiW₂O₆ als Marker; Messung mittels XRF

Bei der Papierherstellung wird das Sicherheitsmerkmal, das 2 Gew.-% Marker-Substanz enthält, eingebracht. Die nominelle Konzentration des Merkmals im Papier bei der Herstellung des Papier beträgt 1 Gew.-%.

Als Markersubstanz dient eine Mischung aus Bi₂W₂O₉, Bi₂W₃O₁₂ und BiW₂O₆, als Füllstoff dient TiO₂. Die Markermischung enthält Partikel mit unterschiedlichen Mengenverhältnissen Bi/W. Solche Mischungen verschiedener Stöchiometrien können beispielsweise auch bei einer wenig definierten Herstellung der genannten Verbindungen entstehen. Die Analysetechnik XRF liefert bei 45 keV Anregungsenergie im Emissionsenergiebereich bis 12 keV ausreichend Information, um die Füllstoffe vom Marker zu trennen, obwohl die Röntgenfluoreszenzbanden des Markers nahe beieinander liegen.

Im Energiebereich zwischen 6 keV und 20 keV auftretende Linien der genannten Elemente sind hervorgehoben.

**Tabelle 4**

| Element | Kα [keV] | Kβ [keV] | Lα [keV] | Lβ [keV] | Lγ [keV] |
|---|---|---|---|---|---|
| Wolfram W | 59.31 | 67.23 | 8.39* | 9.67* | 11.3* |
| Wismut Bi | 77.10 | 87.34 | 10.8413* | 13.02* | 15.25* |
| Titan Ti | 4.51 | 4.93 | 0.45 | 0.46 | |

## Patentansprüche

1. Verfahren zur Markierung eines insbesondere in pulverisierter Form vorliegenden lumineszierenden Merkmalsstoffes mit mindestens einem lumineszierenden Marker (1, 2, 3), wobei der lumineszierende Merkmalsstoff für die Authentifizierung von Wertdokumenten geeignet ist, umfassend den Schritt des Vermischens des lumineszierenden Merkmalsstoffes mit einer geringen Menge des in Form von Partikeln vorliegenden lumineszierenden Markers (1, 2, 3, 5, 7, 8), sodass die makroskopische Detektier- und Identifizierbarkeit des lumineszierenden Merkmalsstoffes durch den lumineszierenden Marker (1, 2, 3, 5, 7, 8) nicht beeinflusst wird und der lumineszierende Marker (1, 2, 3, 5, 7, 8) in einem Wertdokument, das ein den markierten lumineszierenden Merkmalsstoff enthaltendes Sicherheitsmerkmal aufweist, nur mittels eines ortsauflösenden Analyseverfahrens, das dazu geeignet ist, bis auf Einzelpartikelebene aufzulösen, detektierbar ist, wobei sich die spektralen Eigenschaften, d.h. die Emissionsbanden und/oder Anregungsbanden, des lumineszierenden Markers (1, 2, 3, 5, 7, 8) und des damit markierten lumineszierenden Merkmalsstoffes nicht oder möglichst wenig überlappen, sodass der lumineszierende Marker (1, 2, 3, 5, 7, 8) und der lumineszierende Merkmalsstoff getrennt nachgewiesen werden können, und wobei der lumineszierende Marker (1, 2, 3, 5, 7, 8) anhand der Form der Emissionsbanden erkennbar und identifizierbar ist.

2. Verfahren nach Anspruch 1, wobei der Anteil des Markers (1, 2, 3, 5, 7, 8) in einem Bereich von 0,1 bis 10 Gew.-%, bevorzugt 1 bis 5 Gew.-%, bezogen auf das Gesamtgewicht des markierten Merkmalsstoffes liegt.

3. Verfahren nach Anspruch 1 oder 2, wobei die Emission des lumineszierenden Markers (1, 2, 3, 5, 7, 8) verglichen mit der Emission des markierten lumineszierenden Merkmalsstoffes in einem anderen spektralen Wellenlängenbereich auftritt.

4. Verfahren nach einem der Ansprüche 1 bis 3, wobei der lumineszierende Marker (1, 2, 3, 5, 7, 8) in einem anderen spektralen Wellenlängenbereich als der markierte lumineszierende Merkmalsstoff anregbar ist.

5. Verfahren nach einem der Ansprüche 1 bis 4, wobei der lumineszierende Marker (1, 2, 3, 5, 7, 8) und der markierte lumineszierende Merkmalsstoff jeweils eine unterschiedliche Lumineszenzlebensdauer aufweisen.

6. Verfahren nach einem der Ansprüche 1 bis 5, wobei die Korngröße (D99) des Markers (1, 2, 3, 5, 7, 8) in einem Bereich von 1 bis 30 µm liegt.

7. Verfahren nach einem der Ansprüche 1 bis 6, wobei das ortsauflösende Analyseverfahren konfokale Lasermikroskopie oder Multiphotonenmikroskopie ist.

8. Verfahren nach einem der Ansprüche 1 bis 6, wobei das ortsauflösende Analyseverfahren von der Gruppe bestehend aus ortsaufgelöster Röntgenbeugung, ortsaufgelöster Raman-Streuung, energiedispersiver Röntgenspektroskopie und ortsaufgelöster Röntgenfluoreszenzanalyse gewählt ist.

9. Sicherheitsmerkmal für die Absicherung von Wertdokumenten, umfassend einen markierten lumineszierenden Merkmalsstoff, der durch Vermischen des insbesondere in pulverisierter Form vorliegenden, für die Authentifizierung von Wertdokumenten geeigneten lumineszierenden Merkmalsstoffes mit einer geringen Menge eines in Form von Partikeln vorliegenden lumineszierenden Markers (1, 2, 3, 5, 7, 8) erhältlich ist, sodass die makroskopische Detektier- und Identifizierbarkeit des lumineszierenden Merkmalsstoffes durch den lumineszierenden Marker (1, 2, 3, 5, 7, 8) nicht beeinflusst wird und der lumineszierende Marker (1, 2, 3, 5, 7, 8) in einem das Sicherheitsmerkmal aufweisenden Wertdokument nur mittels eines ortsauflösenden Analyseverfahrens, das dazu geeignet ist, bis auf Einzelpartikelebene aufzulösen, detektierbar ist, und wobei sich die spektralen Eigenschaften, d.h. die Emissionsbanden und/oder Anregungsbanden, des lumineszierenden Markers (1, 2, 3, 5, 7, 8) und des damit markierten lumineszierenden Merkmalsstoffes nicht oder möglichst wenig überlappen, sodass der lumineszierende Marker (1, 2, 3, 5, 7, 8) und der lumineszierende Merkmalsstoff getrennt nachgewiesen werden können, und wobei der lumineszierende Marker (1, 2, 3, 5, 7, 8) anhand der Form der Emissionsbanden erkennbar und identifizierbar ist.

10. Sicherheitsmerkmal nach Anspruch 9, wobei der Anteil des Markers (1, 2, 3, 5, 7, 8) in einem Bereich von 0,1 bis 10 Gew.-%, bevorzugt 1 bis 5 Gew.-%, bezogen auf das Gesamtgewicht des markierten Merkmalsstoffes liegt.

11. Sicherheitsmerkmal nach Anspruch 9 oder 10, wobei die Emission des lumineszierenden Markers (1, 2, 3, 5, 7, 8) verglichen mit der Emission des markierten lumineszierenden Merkmalsstoffes in einem anderen spektralen Wellenlängenbereich auftritt.

12. Sicherheitsmerkmal nach einem der Ansprüche 9 bis 11, wobei der lumineszierende Marker (1, 2, 3, 5, 7, 8) in einem anderen spektralen Wellenlängenbereich als der markierte lumineszierende Merkmalsstoff anregbar ist.

13. Sicherheitsmerkmal nach einem der Ansprüche 9 bis 12, wobei der lumineszierende Marker (1, 2, 3, 5, 7, 8) und der markierte lumineszierende Merkmalsstoff jeweils eine unterschiedliche Lumineszenzlebensdauer aufweisen.

14. Sicherheitsmerkmal nach einem der Ansprüche 9 bis 13, wobei die Korngröße (D99) des Markers (1, 2, 3, 5, 7, 8) in einem Bereich von 1 bis 30 µm liegt.

15. Sicherheitsmerkmal nach einem der Ansprüche 9 bis 14, wobei das ortsauflösende Analyseverfahren konfokale Lasermikroskopie oder Multiphotonenmikroskopie ist.

16. Sicherheitsmerkmal nach einem der Ansprüche 9 bis 14, wobei das ortsauflösende Analyseverfahren von der Gruppe bestehend aus ortsaufgelöster Röntgenbeugung, ortsaufgelöster Raman-Streuung, energiedispersiver Röntgenspektroskopie und ortsaufgelöster Röntgenfluoreszenzanalyse gewählt ist.

17. Wertdokument, insbesondere eine Banknote, mit einem Sicherheitsmerkmal nach einem der Ansprüche 9 bis 16.

18. Verfahren zur Prüfung der Herkunft des Wertdokuments nach Anspruch 17, umfassend den Schritt des Detektierens des Markers (1, 2, 3, 5, 7, 8) mittels eines ortsauflösenden Analyseverfahrens, das dazu geeignet ist, bis auf Einzelpartikelebene aufzulösen.

## Claims

1. A method for marking a luminescent feature substance, present in particular in pulverized form, with at least one luminescent marker (1, 2, 3), with the luminescent feature substance being suitable for the authentication of value documents, comprising the step of mixing the luminescing feature substance with a small quantity of the luminescent marker (1, 2, 3, 5, 7, 8) present in the form of particles, so that the macroscopic detectability and identifiability of the luminescent feature substance is not influenced by the luminescent marker (1, 2, 3, 5, 7, 8) and the luminescent marker (1, 2, 3, 5, 7, 8) is detectable in a value document having a security feature containing the marked luminescent feature substance only by means of a spatially resolving analytical method which is suitable to resolve down to the single-particle level, wherein the spectral properties, i.e. the emission bands and/or excitation bands, of the luminescent marker (1, 2, 3, 5, 7, 8) and of the luminescent feature substance marked therewith do not overlap, or overlap as little as possible, so that the luminescent marker (1, 2, 3, 5, 7, 8) and the luminescent feature substance can be proven separately, and wherein the luminescent marker (1, 2, 3, 5, 7, 8) are recognizable and identifiable with the aid of the shape of the emission bands.

2. The method according to claim 1, wherein the content of the marker (1, 2, 3, 5, 7, 8) lies in a range of 0.1 to 10 wt.%, preferably 1 to 5 wt.%, based on the total weight of the marked feature substance.

3. The method according to claim 1 or 2, wherein the emission of the luminescent marker (1, 2, 3, 5, 7, 8) occurs in another spectral wavelength region compared to the emission of the marked luminescent feature substance.

4. The method according to any of claims 1 to 3, wherein the luminescent marker (1, 2, 3, 5, 7, 8) is excitable in another spectral wavelength region than the marked luminescent feature substance.

5. The method according to any of claims 1 to 4, wherein the luminescent marker (1, 2, 3, 5, 7, 8) and the marked luminescent feature substance respectively have a different lifetime of luminescence.

6. The method according to any of claims 1 to 5, wherein the grain size (D99) of the marker (1, 2, 3, 5, 7, 8) lies in a range of 1 to 30 µm.

7. The method according to any of claims 1 to 6, wherein the spatially resolving analytical method is confocal laser microscopy or multiphoton microscopy.

8. The method according to any of claims 1 to 6, wherein the spatially resolving analytical method is chosen from the group consisting of spatially resolved X-ray diffraction, spatially resolved Raman scattering, energy-dispersive X-ray spectroscopy and spatially resolved X-ray fluorescence analysis.

9. A security feature for the safeguarding of value documents, comprising a marked luminescent feature substance which is obtainable by mixing the luminescent feature substance, present in particular in pulverized form and suitable for the authentication of value documents, with a small quantity of a luminescent marker (1, 2, 3, 5, 7, 8) present in the form of particles, so that the macroscopic detectability and identifiability of the luminescent feature substance is not influenced by the luminescent marker (1, 2, 3, 5, 7, 8) and the luminescent marker (1, 2, 3, 5, 7, 8) is detectable in a value document having the security feature only by means of a spatially resolving analytical method which is suitable to resolve down to the single-particle level, and wherein the spectral properties, i.e. the emission bands and/or excitation bands, of the luminescent marker (1, 2, 3, 5, 7, 8) and of the luminescent feature substance marked therewith do not overlap, or overlap as little as possible, so that the luminescent marker (1, 2, 3, 5, 7, 8) and the luminescent feature substance can be proven separately, and wherein the luminescent marker (1, 2, 3, 5, 7, 8) are recognizable and identifiable with the aid of the shape of the emission bands..

10. The security feature according to claim 9, wherein the content of the marker (1, 2, 3, 5, 7, 8) lies in a range of 0.1 to 10 wt.%, preferably 1 to 5 wt.%, based on the total weight of the marked feature substance.

11. The security feature according to claim 9 or 10, wherein the emission of the luminescent marker (1, 2, 3, 5, 7, 8) occurs in another spectral wavelength region compared to the emission of the marked luminescent feature substance.

12. The security feature according to claim 9 to 11, wherein the luminescent marker (1, 2, 3, 5, 7, 8) is excitable in another spectral wavelength region than the marked luminescent feature substance.

13. The method according to any of claims 9 to 12, wherein the luminescent marker (1, 2, 3, 5, 7, 8) and the marked luminescent feature substance respectively have a different lifetime of luminescence

14. The security feature according to any of claims 9 to 13, wherein the grain size (D99) of the marker (1, 2, 3, 5, 7, 8) lies in a range of 1 to 30 µm.

15. The security feature according to any of claims 9 to 14, wherein the spatially resolving analytical method is confocal laser microscopy or multiphoton microscopy.

16. The security feature according to any of claims 9 to 14, wherein the spatially resolving analytical method is chosen from the group consisting of spatially resolved X-ray diffraction, spatially resolved Raman scattering, energy-dispersive X-ray spectroscopy and spatially resolved X-ray fluorescence analysis.

17. A value document, in particular a bank note, having a security feature according to any of claims 9 to 16.

18. A method for checking the origin of the value document according to claim 17, comprising the step of detecting the marker (1, 2, 3, 5, 7, 8) by means of a spatially resolving analytical method which is suitable to resolve down to the single-particle level.

## Revendications

1. Procédé de marquage d'une substance caractéristique luminescente, se trouvant en particulier sous forme pulvérisée, avec au moins un marqueur (1, 2, 3) luminescent, cependant que la substance caractéristique luminescente est appropriée à l'authentification de documents de valeur, comprenant l'étape du mélange de la substance caractéristique luminescente avec une faible quantité du marqueur (1, 2, 3, 5, 7, 8) luminescent se trouvant sous forme de particules, de telle sorte que la détectabilité et l'identifiabilité macroscopique de la substance caractéristique luminescente n'est pas influencée par le marqueur (1, 2, 3, 5, 7, 8) luminescent et que le marqueur (1, 2, 3, 5, 7, 8) luminescent, dans un document de valeur qui comporte une caractéristique de sécurité contenant la substance caractéristique luminescente marquée, ne peut être détecté qu'au moyen d'un procédé d'analyse à résolution locale approprié à avoir une résolution allant jusqu'au niveau des particules individuelles, cependant que les propriétés spectrales, c'est-à-dire les bandes d'émission et/ou les bandes d'excitation, du marqueur (1, 2, 3, 5, 7, 8) luminescent et de la substance caractéristique luminescente marquée par lui, ne se chevauchent pas ou aussi peu que possible, de telle sorte que le marqueur (1, 2, 3, 5, 7, 8) luminescent et la substance caractéristique luminescente peuvent être décelés séparément, et cependant que le marqueur (1, 2, 3, 5, 7, 8) luminescent est reconnaissable et identifiable à l'aide de la forme des bandes d'émission.

2. Procédé selon la revendication 1, cependant que la proportion du marqueur (1, 2, 3, 5, 7, 8) est située entre 0,1 et 10 pourcent par poids, de préférence entre 1 et 5 pourcent par poids relativement au poids total de la substance caractéristique marquée.

3. Procédé selon la revendication 1 ou 2, cependant que l'émission du marqueur (1, 2, 3, 5, 7, 8) luminescent, en comparaison avec l'émission de la substance caractéristique luminescente marquée, se produit dans une autre plage spectrale de longueurs d'onde.

4. Procédé selon une des revendications de 1 à 3, cependant que le marqueur (1, 2, 3, 5, 7, 8) luminescent est excitable dans une autre plage spectrale de longueurs d'onde que la substance caractéristique luminescente marquée.

5. Procédé selon une des revendications de 1 à 4, cependant que le marqueur (1, 2, 3, 5, 7, 8) luminescent et la substance caractéristique luminescente marquée présentent respectivement une différente durée de vie de la luminescence.

6. Procédé selon une des revendications 1 à 5, cependant que la taille de grain (D99) du marqueur (1, 2, 3, 5, 7, 8) est comprise entre 1 et 30 µm.

7. Procédé selon une des revendications de 1 à 6, cependant que le procédé d'analyse à résolution locale est microscopie confocale à balayage laser ou microscopie multiphotonique.

8. Procédé selon une des revendications de 1 à 6, cependant que le procédé d'analyse à résolution locale est choisi dans le groupe consistant en diffraction des rayons X à résolution locale, dispersion de Raman à résolution locale, spectroscopie aux rayons X à dispersion d'énergie et analyse à résolution locale par fluorescence de rayons X.

9. Caractéristique de sécurité destinée à la sécurisation de documents de valeur, comprenant une substance caractéristique luminescente marquée pouvant être obtenue par mélange de la substance caractéristique luminescente, appropriée à l'authentification de documents de valeur et se trouvant en particulier sous forme pulvérisée, avec une faible quantité d'un marqueur (1, 2, 3, 5, 7, 8) luminescent se trouvant sous forme de particules, de telle sorte que la détectabilité et l'identifiabilité macroscopique de la substance caractéristique luminescente n'est pas influencée par le marqueur (1, 2, 3, 5, 7, 8) luminescent et que le marqueur (1, 2, 3, 5, 7, 8) luminescent, dans un document de valeur comportant la caractéristique de sécurité, ne peut être détecté qu'au moyen d'un procédé d'analyse à résolution locale approprié à avoir une résolution allant jusqu'au niveau des particules individuelles, et cependant que les propriétés spectrales, c'est-à-dire les bandes d'émission et/ou les bandes d'excitation, du marqueur (1, 2, 3, 5, 7, 8) luminescent et de la substance caractéristique luminescente marquée par lui, ne se chevauchent pas ou aussi peu que possible, de telle sorte que le marqueur (1, 2, 3, 5, 7, 8) luminescent et la substance caractéristique luminescente peuvent être décelés séparément, et cependant que le marqueur (1, 2, 3, 5, 7, 8) luminescent est reconnaissable et identifiable à l'aide de la forme des bandes d'émission.

10. Caractéristique de sécurité selon la revendication 9, cependant que la proportion du marqueur (1, 2, 3, 5, 7, 8) est située entre 0,1 et 10 pourcent par poids, de préférence entre 1 et 5 pourcent par poids relativement au poids total de la substance caractéristique marquée.

11. Caractéristique de sécurité selon la revendication 9 ou 10, cependant que l'émission du marqueur (1, 2, 3, 5, 7, 8) luminescent, en comparaison avec l'émission de la substance caractéristique luminescente marquée, se produit dans une autre plage spectrale de longueurs d'onde.

12. Caractéristique de sécurité selon une des revendications de 9 à 11, cependant que le marqueur (1, 2, 3, 5, 7, 8) luminescent est excitable dans une autre plage spectrale de longueurs d'onde que la substance caractéristique luminescente marquée.

13. Caractéristique de sécurité selon une des revendications de 9 à 12, cependant que le marqueur (1, 2, 3, 5, 7, 8) et la substance caractéristique luminescente marquée présentent respectivement une différente durée de vie de la luminescence.

14. Caractéristique de sécurité selon une des revendications de 9 à 13, cependant que la taille de grain (D99) du marqueur (1, 2, 3, 5, 7, 8) est comprise entre 1 et 30 µm.

15. Caractéristique de sécurité selon une des revendications de 9 à 14, cependant que le procédé d'analyse à résolution locale est microscopie confocale à balayage laser ou microscopie multiphotonique.

16. Caractéristique de sécurité selon une des revendications de 9 à 14, cependant que le procédé d'analyse à résolution locale est choisi dans le groupe consistant en diffraction des rayons à résolution locale, dispersion de Raman à résolution locale, spectroscopie aux rayons X à dispersion d'énergie et analyse à résolution locale par fluorescence de rayons X.

17. Document de valeur, en particulier un billet de banque, comprenant une caractéristique de sécurité selon une des revendications de 9 à 16.

18. Procédé de vérification de la provenance du document de valeur selon la revendication 17, comprenant l'étape de la détection du marqueur (1, 2, 3, 5, 7, 8) au moyen d'un procédé d'analyse à résolution locale approprié à avoir une résolution allant jusqu'au niveau des particules individuelles.
